# EUROPÄISCHE PATENTANMELDUNG

(11) **EP 0 658 737 A2**
(43) Veröffentlichungstag der Anmeldung: **21.06.1995**
(21) Anmeldenummer: 94118464.0
(22) Anmeldetag: 24.11.1994
(51) Int. Cl.: F28F 7/02, F28F 21/04, F28F 21/02

(54) **Wärmetauscherblock**

(30) Priorität: 17.12.1993 DE 9319430 U
(71) Anmelder: DEUTSCHE CARBONE AG, D-60437 Frankfurt (DE)
(72) Erfinder: Heinz, Peter Ulrich, D-60431 Frankfurt (DE)
(74) Vertreter: Schubert, Siegmar, Dipl.-Ing.

(57) **Zusammenfassung**

Aus einem Monoblock aus keramischem Material gefertigter Wärmetauscherblock mit wenigstens zwei Kanalsystemen für durch den Block hindurchströmende Medien, wobei zumindest eines der Kanalsysteme aus im Querschnitt länglichen Schlitzen besteht, deren Wände im Querschnitt durch sich überlappende Kreisbögen ausgebildet sind.

## Beschreibung

Die Erfindung betrifft einen aus einem Monoblock aus keramischem Material gefertigten Wärmetauscherblock mit mindestens zwei Kanalsystemen für durch den Block hindurchströmende Medien.

Wärmetauscher sind gekennzeichnet durch eine, bedingt durch die geometrische Form, definierte Wärmetauscherfläche. Wärmetauscher werden entweder in Form von Rohrbündeln erstellt oder, wie vorstehend angegeben, in Form von Monoblöcken, die dann entsprechende Bohrungen zur Ausbildung der Kanalsysteme erhalten.

Bei bekannten derartigen Wärmeaustauscherblöcken haben alle Bohrungen der beiden Kanalsysteme über ihre ganze Länge einen kreisförmigen Querschnitt. Dies ist bedingt durch das Herstellungsverfahren derartiger Wärmetauscherblöcke, bei denen man das Vollmaterial mit einem geeigneten Werkzeug durchbohrt.

Nachteilig daran ist, bedingt durch das Fertigungsverfahren, die verhältnismäßig geringe Wärmetauscherfläche, gebildet durch die Wandungen der Bohrungen. Eine kleinere Wärmetauscherfläche bedingt nämlich eine entsprechend geringere Wärmeübertragungsleistung.

Ausgehend von einem Wärmetauscherblock mit den Merkmalen des Oberbegriffs von Patentanspruch 1 liegt daher der Erfindung die Aufgabe zugrunde, diesen so zu gestalten, so daß die Wärmeübertragungsleistung deutlich verbessert wird.

Zur Lösung dieser Aufgabe ist die Erfindung dadurch gekennzeichnet, daß zumindest eines der Kanalsysteme aus im Querschnitt länglichen Schlitzen besteht, deren Wände im Querschnitt durch sich überlappende Kreisbögen ausgebildet werden.

Die Herstellung eines erfindungsgemäßen Wärmetauscherblocks ist besonders einfach, da man den Monoblock lediglich mit üblichen Bohrmeißeln dergestalt durchbohren muß, so daß sich die Bohrungen überlappen, um das gewünschte Sägezahnprofil mit radienförmigem Grund, nachfolgend Zahnprofil genannt, zu erhalten.

Den Abstand der Zentren der Kreisbögen wird man geeignet wählen, so daß in jedem Fall die vorteilhafte Profilform erhalten wird. Je stärker man die Zentren der Kreisbögen voneinander beabstandet, um so höher wird das Zahnprofil. In jedem Fall soll aber die Überlappung der Kreisbögen beibehalten bleiben, um den erforderlichen länglichen Schlitz auszubilden.

Durch die Kombination verschiedener Bohrungsdurchmesser im gleichen Kanalsystem können beliebige Kanalausführungen realisiert werden. Dasselbe gilt sinngemäß für die Abstände der Kreisbögen voneinander.

Das Kanalsystem mit dem länglichen Zahnprofil kann sowohl senkrecht als auch waagrecht angeordnet sein. Gibt es zwei derartige Kanalsysteme, so kann ein System senkrecht und das andere System waagrecht bzw. beide Systeme waagrecht bzw. beide Systeme senkrecht angeordnet sein. Hierbei ist sowohl eine kreuzweise als auch eine gleichsinnige Anordnung möglich.

Bevorzugt besteht der Monoblock aus Graphit, weil dies ein Material ist, welches einerseits korrosionsfrei ist und andererseits die Wärme gut leitet. Der Graphit wird mit einem geeigneten Mittel imprägniert, um ihn gasundurchlässig zu machen.

Monoblöcke mit den erfindungsgemäß aufgeführten Kanalsystemen können für die verschiedensten verfahrenstechnischen Operationen wie z. B. Heizen, Kühlen, Kondensieren, Verdampfen von sowohl flüssigen als auch gasförmigen Medien eingesetzt werden.

Bei der Abkühlung und Kondensation von gasförmigen Medien, vorzugsweise Rauchgasen, ergibt sich, bedingt durch das Oberflächenprofil, der vorteilhafte Effekt einer getrennten Führung des gasförmigen Produkts vom flüssigen Kondensat, d. h. während das Kondensat auf dem Profilgrund abläuft, kann die nicht benetzte Wärmetauscherfläche für die weitere Abkühlung des gasförmigen Mediums genutzt werden.

Die Erfindung wird im folgenden anhand von Ausführungsbeispielen näher erläutert, aus denen sich weitere wichtige Merkmale ergeben. Es zeigt:
- **Figur 1**: perspektivisch und schematisch einen erfindungsgemäßen Monoblock zur Erläuterung der wesentlichen Merkmale der Erfindung;
- **Figur 2**: demgegenüber vergrößert einen Schnitt durch den Monoblock, der einen der länglichen, wellenförmig profilierten Schlitze darstellt;
- **Figur 3**: einen Längsschnitt durch einen aus einem derartigen Monoblock aufgebauten Wärmetauscher;
- **Figur 4**: eine Ansicht ähnlich Figur 2 mit weiteren Erläuterungen;
- **Figur 5**: einen Längsschnitt durch den Wärmetauscher nach Figur 3 bei einer ersten Ausführungsform;
- **Figur 6**: einen Längsschnitt entsprechend Figur 5 bei einer zweiten Ausführungsform;
- **Figur 7**: schematisch einen senkrechten Schnitt durch einen erfindungsgemäßen Wärmetauscherblock, der durch einen Brenner ergänzt ist;
- **Figur 8**: einen Querschnitt durch Figur 7;

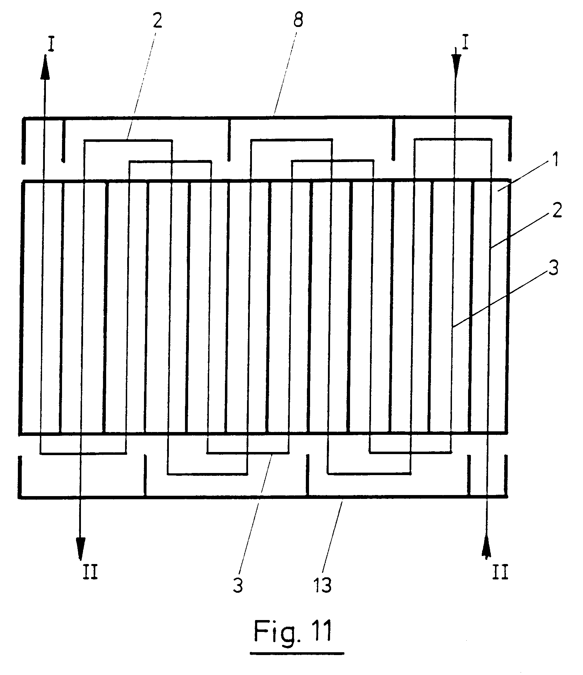

- **Figur 9**: eine perspektivische Ansicht eines Monoblocks mit zwei sich kreuzenden Kanalsystemen, die beide als Schlitze mit Zahnprofil ausgebildet sind, hier waagrecht angeordnet;
- **Figur 10**: eine Darstellung, bei der beide erfindungsgemäßen Kanalsysteme zueinander parallel verlaufen;
- **Figur 11**: Einzelheiten der Medienführung nach Fig. 10;
- **Figur 12**: eine Darstellung mit senkrechter bzw. waagrechter Anordnung der beiden Kanalsysteme;
- **Figur 13**: eine Darstellung entsprechend Fig. 2, wobei aber auch Bohrungen mit unterschiedlichen Durchmessern gezeigt sind.

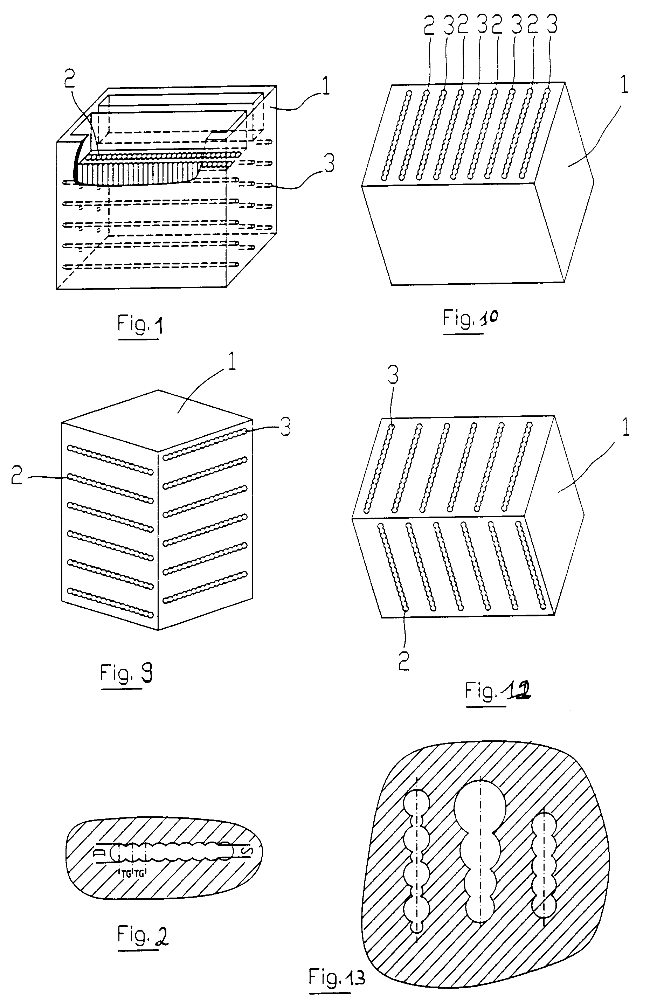

Der Wärmetauscherblock 1 ist gekennzeichnet durch sich kreuzende Kanäle (Figur 1). Hierbei wird das gasförmige Medium I durch die senkrechten, langlochförmigen Kanäle 2 geführt, während das Medium II durch die waagerechten, rohrförmigen Kanäle 3 geführt wird. Eine Vermischung der Medien ist aufgrund der geometrischen Anordnung der Kanäle nicht möglich.

Die Kanäle (Figur 2) zur Aufnahme des gasförmigen Mediums sind gekennzeichnet durch eine Vielzahl (mindestens zwei) parallel angeordneter Bohrungen, wobei der Abstand (TG) zwischen zwei parallelen Bohrungen kleiner dem Durchmesser D der Bohrung ist. Bohrt man unter diesen Bedingungen eine Vielzahl paralleler Bohrungen, so erhält man einen langlochförmigen Querschnitt, der durch eine Wandung mit Zahnprofil gekennzeichnet ist.

Der Bohrungsdurchmesser D, die Anzahl der Bohrungen und der Abstand TG bestimmen die Länge und Form des Kanals 2. Durch Variation des Abstandes TG sowie durch Variation des Bohrungsdurchmessers D kann der Spalt S den Betriebsanforderungen angepaßt werden. Ein gleicher Effekt wird durch die Parallelschaltung mehrerer Kanäle 2 erreicht. Werden mehrere Kanäle 2 parallel geschaltet, so befindet sich zwischen zwei Kanälen 2 immer ein rohrförmiger Kanal 3.

Erfindungsgemäß ist der Block 1 für die Kühlung von agressiven Gasen vorgesehen. Bei der Abkühlung des Gases wird zunächst der Säuretaupunkt und bei weiterer Abkühlung der Wasserdampftaupunkt durchschritten. Hierbei kondensiert der in dem Gas enthaltene Wasserdampf. Die im Abgas befindlichen Schadstoffe (SO₃, SO₂, C₁₂ usw.) werden von dem Kondensat III aufgenommen, mit dem vorteilhaften Effekt, daß die im Abgas enthaltenen Schadstoffe reduziert werden. Das sich bildende Kondensat (schwefelige Säure, HCL usw.) ist äußerst agressiv und bedingt den Einsatz korrosionsfester Werkstoffe.

Hier hat sich der Einsatz von keramischen Werkstoffen, vorzugsweise imprägnierter Graphit, bewährt. Imprägnierter Graphit ermöglicht eine rationelle wirtschaftliche Fertigung von Wärmetauscherblöcken in der beschriebenen Ausführung.

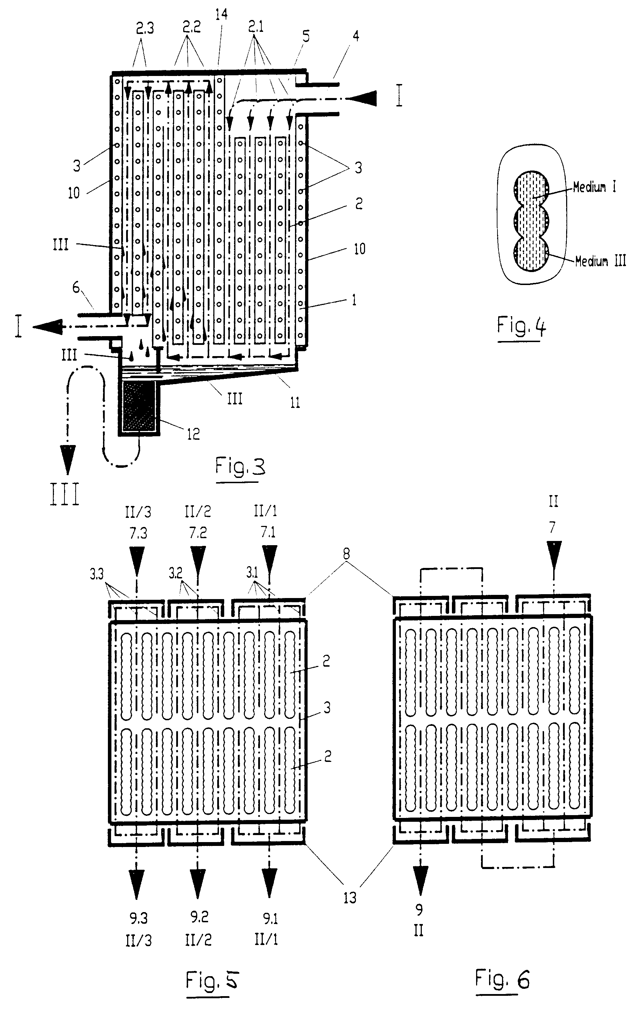

Anhand der Figuren 3 - 6 wird die Funktion des Wärmetauschers beschrieben. Das heiße agressive Medium I tritt über den Eintrittstutzen 4 in die Verteilerkammer 5 ein und passiert die Kanäle 2.1, 2.2, 2.3 und verläßt über den Stutzen 6 wieder den Wärmetauscher. Das bzw. die Medien II treten über Stutzen 7 bzw. 7.1, 7.2, 7.3 in die Verteilerkammer 8 ein, werden verteilt, passieren die Kanäle 3 und treten über Stutzen 9 bzw. 9.1, 9.2, 9.3 wieder aus.

Die geometrische Anordnung der Kanäle 2 ist so ausgeführt, so daß sie eine Kühlung sämtlicher mit heißen Medium I beaufschlagter Flächen in den Kanälen 2 sowie im Bereich der Kammer 5, dem thermisch am höchsten beanspruchten Teil, bewirken. Vorteilhafterweise werden dadurch auch die Außenwandungen 10 des Blockes 1 gekühlt, so daß eine thermische Isolierung praktisch nicht erforderlich ist.

Das Medium I wird auf dem Weg von Stutzen 4 zu Stutzen 6 abgekühlt. Hierdurch nimmt die spezifische Dichte des gasförmigen Mediums I zu. Die Folge davon ist, daß bei gleichbleibendem Strömungsquerschnitt des Kanals 2 die Strömungsgeschwindigkeit des Mediums I stetig abnimmt.

Da die Strömungsgeschwindigkeit einen erheblichen Einfluß auf die Wärmeübertragungsleistung hat, muß versucht werden, die Bedingung: Geschwindigkeit = konstant einzuhalten. Dies erreicht man vorteilhafterweise einerseits durch Variation des Strömungsdurchmessers D, des Kanals 2, andererseits durch Anordnung mehrerer paralleler Kanäle 2, 2.1, 2.2, 2.3 oder durch Variation von beiden Maßnahmen.

Wie bereits beschrieben sind die Wandungen des Kanals 2, 2.1, 2.2, 2.3 wellig ausgeführt. Durch das wellenförmige Profil erzielt man einen erheblichen Oberflächengewinn gegenüber einem vergleichbaren glatten Profil.

Durch die wellenförmige Oberfläche wird weiterhin eine Trennung zwischen dem gasförmigen Medium I und dem kondensierenden Medium I erreicht. (Das Kondensat III läuft in den senkrechten Wellentälern ab - vgl. Figur 4). Diese Oberflächenstruktur wirkt sich insgesamt vorteilhaft auf die Wärmeübertragungsleistung des Wärmetauschers aus.

Das ablaufende saure (agressive) Kondensat III wird von der Wanne 11 aufgefangen und abgeleitet oder in einer integrierten Neutralisationseinheit 12 neutralisiert und dann abgeleitet.

Die Führung des Mediums II in den Kanälen 3 kann je nach Ausführung der Hauben 8 und 13 beliebig sein. So ist es einerseits möglich, sämtliche Kanäle 3, 3.1, 3.2, 3.3 usw. einzügig, d. h. in Reihe zu durchströmen, andererseits ist es auch möglich, sämtliche Kanäle 3, 3.1, 3.2, 3.3 usw. parallel zu durchströmen. Es kann somit jedem Kanal 3, 3.1, 3.2, 3.3 usw. ein separater Kühlkreislauf zugeordnet werden.

Die Platte 14 verschließt die Kanäle 2 und die Kammer 5. Zu Reinigungszwecken kann die Platte 14 entfernt werden.

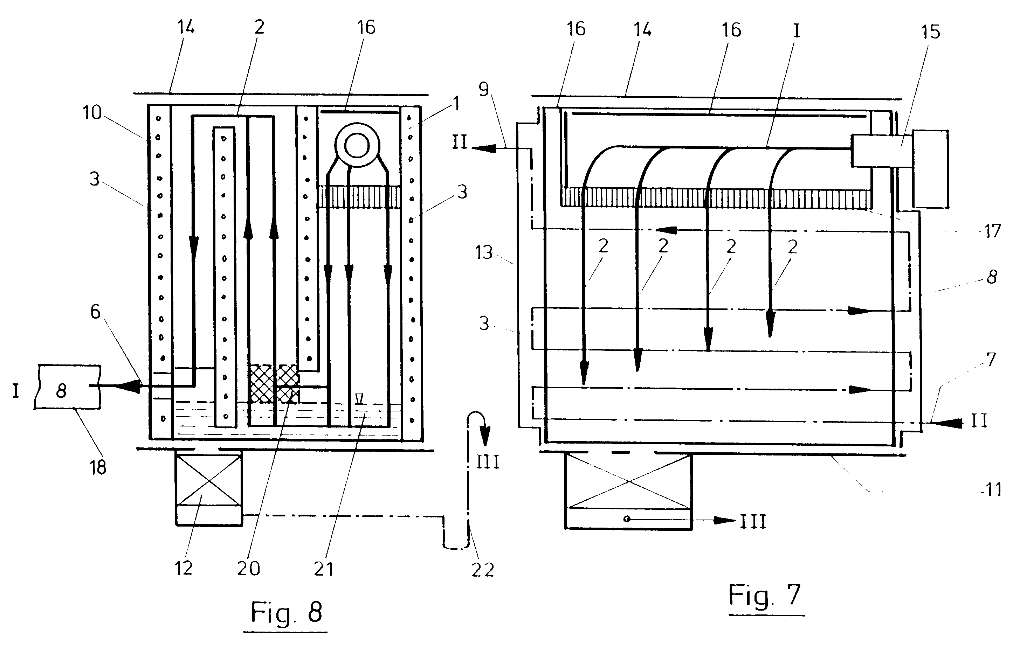

Die Figuren 7 und 8 zeigen einen erfindungsgemäßen Wärmetauscherblock, der durch einen Brenner 15 ergänzt ist, so daß die Abgaswärme aus Rauchgasen genutzt werden kann. Gleichzeitig ist dargestellt, daß die Abgase mit Hilfe eines Katalysators 17 entstickt werden können und daß das Kondensat durch die Baueinheit 12 neutralisiert werden kann. Außerdem ist eine Absorptionseinheit 20 vorgesehen, die gasförmige Schadstoffe im Abgas absorbiert.

Die Figuren 7 und 8 zeigen auch, daß die Flamme 19 des Brenners 15 in einem Raum 5 an der Eingangsseite des Monoblocks brennt, die durch einen thermischen Schutz (16) geschützt ist. Der Brenner 15 ist hierbei in eine Wand des Monoblocks eingesetzt.

Die Abgase des Brenners durchströmen zunächst den Katalysator 17 und dann die Kanäle 2, wie durch die Pfeile in den Figuren 7 und 8 angedeutet.

Auch hier ist deutlich, daß die Brennkammer durch die wasserführenden Kanäle 3 gekühlt wird.

Am Ausgang des Rauchzugs kann ein Saugventilator 18 vorgesehen sein, um das Durchströmen der Rauchgase zu unterstützen.

Figur 8 zeigt auch die Kontaktfläche 21 zwischen dem Abgas und dem Niveau des Kondensats und die Absorptionseinheit 20 ist so angeordnet, daß sie vom Kondensat benetzt wird. Durch Kapillarität steigt also das Kondensat ständig in der Absorptionseinheit hoch und hält diese dadurch feucht.

Schließlich ist in Figur 8 noch eine Füllstandsregelung 22 für das Kondensat vorgesehen.

## Patentansprüche

1. Aus einem Monoblock aus keramischem Material gefertigter Wärmetauscherblock (1) mit wenigstens zwei Kanalsystemen (2,3) für durch den Block (1) hindurchströmende Medien,
**dadurch gekennzeichnet,**
daß zumindest eines der Kanalsysteme (2,3) aus im Querschnitt länglichen Schlitzen (S) besteht, deren Wände im Querschnitt durch sich überlappende Kreisbögen ausgebildet sind.

2. Wärmetauscherblock nach Anspruch 1,
**dadurch gekennzeichnet,**
daß das Wandprofil aus Kreisbögen mit einander gleichen oder verschiedenen Radien zusammengesetzt ist.

3. Wärmetauscherblock nach Anspruch 1 oder 2,
**dadurch gekennzeichnet,**
daß die Abstände der den Schlitz ausbildenden Kreisbögen gleich oder unterschiedlich sind.

4. Wärmetauscherblock nach einem der Ansprüche 1 bis 3,
**dadurch gekennzeichnet,**
daß der Strömungsquerschnitt des Kanalsystems mit den länglichen, wellenförmig profilierten Schlitzen (S) in Strömungsrichtung abnimmt oder zunimmt.

5. Wärmetauscherblock nach einem der Ansprüche 1 - 4,
**dadurch gekennzeichnet,**
daß der Monoblock (1) aus keramischem Werkstoff, vorzugsweise aus imprägniertem Graphit besteht.

6. Wärmetauscherblock nach einem der Ansprüche 1 - 5,
**dadurch gekennzeichnet,**
daß am Boden des Wärmetauschers eine vorzugsweise in den Wärmetauscher integrierte Einheit (12) zum Neutralisieren von flüssigem Kondensat angeordnet ist.

7. Wärmetauscherblock nach einem der Ansprüche 1 - 6,
**dadurch gekennzeichnet,**
daß an der Eingangsseite des Kanalsystems (1,2) mit den länglichen, profilierten Schlitzen (S) in den Wärmetauscher ein Brenner (15) integriert ist, dessen Flamme in einem Hohlraum des Monoblocks (1) brennt.

8. Wärmetauscherblock nach Anspruch 7,
**dadurch gekennzeichnet,**
daß an der Eingangsseite dieses Kanalsystems ein Katalysator (17) vorgesehen ist.

9. Wärmetauscherblock nach Anspruch 7 oder Anspruch 8,
**dadurch gekennzeichnet,**
daß in dem Rauchzug ein Absorber (20) für Schadstoffe angeordnet ist.
